# EUROPEAN PATENT APPLICATION

(11) **EP 0 955 597 A2**
(43) Date of publication of application: **10.11.1999**
(21) Application number: 99303463.6
(22) Date of filing: 04.05.1999
(51) Int. Cl.: G06F 17/60

(54) **Dual currency banking system**

(30) Priority: 05.05.1998 US 84369 P
(71) Applicant: Crystal Systems Solutions Ltd., Herzlia 46120 (IL)
(72) Inventor: Crystal, Aaron, Mevaseret Zion 90805 (IL)
(74) Representative: Ben-Nathan, Laurence Albert

(57) **Abstract**

A multi-currency computer apparatus and a method for operating the apparatus in a multi currency environment is provided. The apparatus includes an input analysis and routing unit, an output combining unit, and a plurality of currency processing systems, connected between the input analysis and the output combining unit. Each of the currency systems is associated with a predetermined currency. The input analysis and routing unit receives currency data, analyzes it and routs it to a selected one of the currency processing units, which is selected according the currency characteristics of the received currency data. The selected currency processing unit processes the received currency data according to the currency associated with the selected currency processing unit, thereby producing processed currency data. The output combining unit combines the processed currency data thereby producing a unified presentation thereof.

## Description

### FIELD OF THE INVENTION

The present invention relates to banking computer systems in general and to dual currency banking computer system, in particular,

### BACKGROUND OF THE INVENTION

Currency banking computer systems are known in the art. Such systems include hardware, the computers themselves and the peripheral devices connected thereto, as well as software applications which are run thereon. These computer systems automate the entire operations of the banks of today.

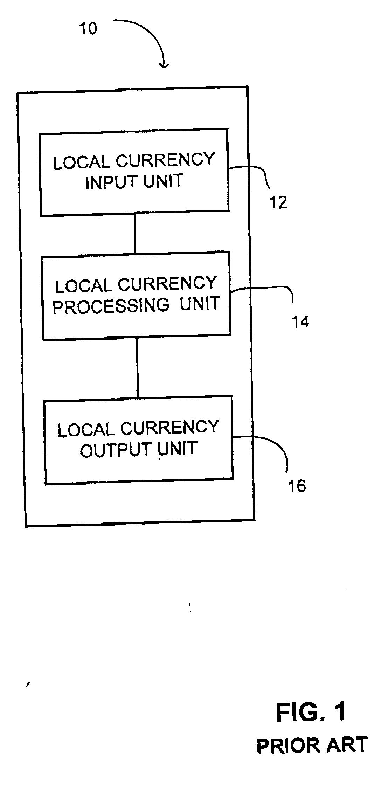

Reference is now made to Fig. 1 which is a schematic illustration of a currency banking computer system, generally referenced 10, which is known in the art.

System 10 includes a local currency input unit 12, a local currency processing unit 14 connected to the local currency input unit 12 and a local currency output unit 16 connected to the local currency processing unit 14. The local currency input unit 12 receives data in any currency, converts it to the local currency and provides the converted data to the local currency processing unit 14. The local currency processing unit 14 processes the converted data according to the local currency with respect to the currency in which the data was originally received. It will be appreciated by those skilled in the art that the converted data, which is stored according to the local currency, can have attributes to external currencies at which it was originally received.

It will be appreciated that most of the banking computer system, which are currently at use, were introduced many years ago and evolved continuously in accordance with the needs of each individual bank. Accordingly, each bank has a computer system which is precisely, tailored for his particular policy, needs and management system.

The major disadvantages of these systems is that they are extremely vulnerable to non-anticipated major changes. One such major change occurs, for example, when the state banking system converts from operating under a single currency to operating under a plurality of currencies.

Such a process is scheduled in Europe for the coming years when the countries within the European community introduce a new common currency called the Euro. It will be noted that in Europe this change is scheduled to occur over a transition period of three years, in which the banking system of each country will have to address both the local currency as well as the newly introduced Euro.

In this case if a selected bank has a multi-currency computer system, then, this change simply adds attributes to the existing system, so as to address the newly added currency.

The problem is much greater if a selected bank has a single currency banking computer system. In this case, there are a number of models which are known in the art.

One model, known in the art, is called the big-bang model, in which banking applications and their data files are converted and brought into production, and the original version is withdrawn. The converted applications operate entirely in Euro-currency, and do not recognize the old national currencies.

During the transition period, bridge routines convert incoming data from national (local) currency to Euros, and output from Euros to national currency, if necessary. Big Bang conversions are suited to internal applications with a minimum of extemal data exchange.

The types of data files are acceptable for Big Bang conversions are single currency, multiple currency and files with multiple record types.

Within the files, the data items which are converted are amounts from national to Euro, formats of amount fields from national to Euro, currency codes to Euro (or an intemal site code for Euros) and exchange rates.

Each of the software applications has to undergo changes in the formats of amount fields, the values of constants, the constants in calculation statements and in the program code to handle special cases. For example, data read from unconverted historical files.

According to another model, known in the art, called duplicate computation conversions, the converted application maintains currency data in both national and Euro currencies, and all calculations are performed with both currencies. Data input and output records are modified by adding currency code fields and either duplicating currency fields within records or duplicating records.

It will be appreciated by those skilled in the art that this approach requires a tremendous effort in converting a large number of software applications and file structures which further results in an enormous amount of tests for ensuring that the converted system will function properly.

A further model is called the Ongoing model. Ongoing conversion methods are required for multi-currency systems, which are characterized by many external data sources and destinations, that convert to Euro-currency at different times during the transition period.

Such a conversion includes the following steps:

Modifying the current application to handle Euros in addition to national currencies (it will be noted that initially, the application processes national currency only).

Switching the incoming data to Euros and the program starts operating in Euros with respect to a selected external source. This step of switching is executed for each extemal source on a different target date.

Providing a decision table which specifies the switch-over date for each source.

It will be noted that in this model, all of internal data derived from the selected source is converted to Euro on the switch-over date. This is a one-time, batch operation.

Special provisions are made for handling overlap problems, such as the case of a firm that switches to Euros, for example, on, 1.1.2000, but for a short period thereafter some of the incoming data still refers to dates which are prior to 1.1.2000 and hence, needs to be processed in the national currency.

### SUMMARY OF THE PRESENT INVENTION

It is an object of the present invention to provide a novel multi current banking computer system, which overcomes the disadvantages of the prior art.

It is another object of the present invention to provide a novel method for converting a currency system so as to operate with an additional currency.

It is a further object of the present invention to provide a novel method for operating the multi-currency banking computer system of the invention so as to operate with an additional currency.

In accordance with the present invention, there is thus provided a multi-currency computer apparatus. The apparatus includes an input analysis and routing unit, an output combining unit, and a plurality of currency processing systems, connected between the input analysis and the output combining unit. Each of the currency systems is associated with a predetermined currency.

The input analysis and routing unit receives currency data, analyzes it and routs it to a selected one of the currency processing units, which is selected according the currency characteristics of the received currency data.

The selected currency processing unit processes the received currency data according to the currency associated with the selected currency processing unit, thereby producing processed currency data.

The output combining unit combines the processed currency data thereby producing a unified presentation thereof.

In accordance with another aspect of the inventino there is provided a method for operating the apparatus in a multi currency environment. The method includes the steps of:
receiving currency data from an external source,
analyzing the received data thereby determining the currency characteristics of the received data,
directing the received data according to the currency characteristics to a selected one of the currency systems, and
processing the received data in the selected currency system, according to the currency associated therewith.

The method can further include the step of combining the processed data from the selected currency systems, thereby producing a unified presentation thereof.

### BRIEF DESCRIPTION OF THE DRAWINGS

The present invention will be understood and appreciated more fully from the following detailed description taken in conjunction with the drawings in which:
Fig. 1 is a schematic illustration of a currency banking computer system, which is known in the art;
Fig. 2 is a schematic illustration of a dual currency computer apparatus, constructed and operative in accordance with a preferred embodiment of the invention;
Fig. 3 is a schematic illustration of method for operating the system of Fig. 2, operative in accordance with a preferred embodiment of the invention; and
Fig. 4 is an illustration of the schedule of operating the currency systems and the transition period therebetween.

### DETAILED DESCRIPTION OF PREFERRED EMBODIMENTS

The present invention overcomes the disadvantages of the prior art by maintaining the original local currency system, adding a duplicate system for the new currency and modules for combining the local currency system and the new currency system at the input and output levels.

According to one aspect of the invention, the current system is duplicated and where the duplicate is adapted to operate according to the new currency. Each system runs on separate hardware and interacts with the other system only at the input and output stages.

Accordingly, a new version of the existing application is prepared. This new version is identical to the original version except that it processes new-currency instead of local currency.

Both versions operate concurrently in the production environment and incoming data is intercepted and directed to the appropriate version - national (local) currency data to the original version, new currency data to the new version.

At the end of the transition period, all national currency data is converted to the new-currency, the interceptor routine is removed, and the national currency version of the application is withdrawn.

According to another aspect the system is duplicated to run at the same time on the current hardware as a different task.

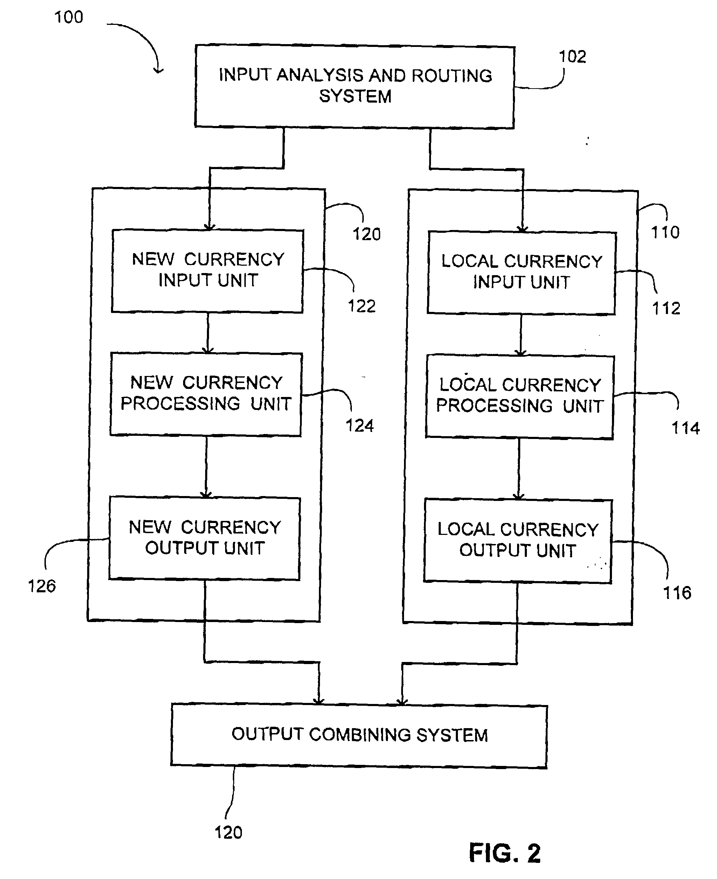

Reference is now made to Fig. 2, which is a schematic illustration of a dual currency computer apparatus, generally referenced 100, constructed and operative in accordance with a preferred embodiment of the invention.

Apparatus 100 includes a local currency system 110, a new currency system 120, an input analysis and routing system 102 and an output combining system 104. The input analysis and routing system 102 and the output combining system 104 are connected to the local currency system 110 and to the new currency system 120.

The local currency system 110 includes a local currency input unit 112, a local currency processing unit 114, connected to the local currency input unit 112 and a local currency output unit 116 connected to the local currency processing unit 114.

The new currency system 120 includes a new currency input unit 122, a new currency processing unit 124, connected to the new currency input unit 122 and a new currency output unit 126 connected to the new currency processing unit 124.

The local currency system 110 is the currently operative system, which remains unchanged. The new currency system 120 is an added system which is operates very similar to the local currency system 110, but with the new currency.

Preferably, the new currency system 120 is a duplicate of the local currency system 110. In the present example, the only difference between the local and the new currency systems is the currency used in each one. This can be accomplished by installing an additional computer system and copying all of the software from the local currency system 110 to this new system.

The input analysis system 102 analyzes data which is provided from a user, such as a bank teller, a bank client at an ATM machine or any storage media, and directs this data to the appropriate currency system.

When the input analysis system 102 determines that the input data is related to the local currency, then, it directs this data to the local currency system 110. Otherwise, when the input analysis system 102 determines that the input data is related to the new currency, then, it directs this data to the new currency system 120.

Each of the currency systems 110 and 120 processes the data provided thereto, in their respective processing units 114 and 124, generally, according to the same set of rules.

The output combining system 104 receives the processed data from the output units 116 and 126 and combines therebetween.

When a client requests a full presentation of all of his assets, the output combining unit 104 combines the local currency processed data received from the local currency output unit 116 and the new currency processed data, received from the new currency output unit 126.

It will be noted that the input analysis system can be extended to the computer terminal of the bank teller. This input system can provide the bank teller, on the same terminal, two windows, one for the local currency and the other for the new currency. Each of the windows includes the same operations as in the other. Accordingly, the only thing which is different is the title of the window which indicates the currency according to which the operations listed in this window will be executed.

According to another example, the bank-teller terminal provides a combined window which includes two commands for each operation, one in the local currency and the other in the new currency.

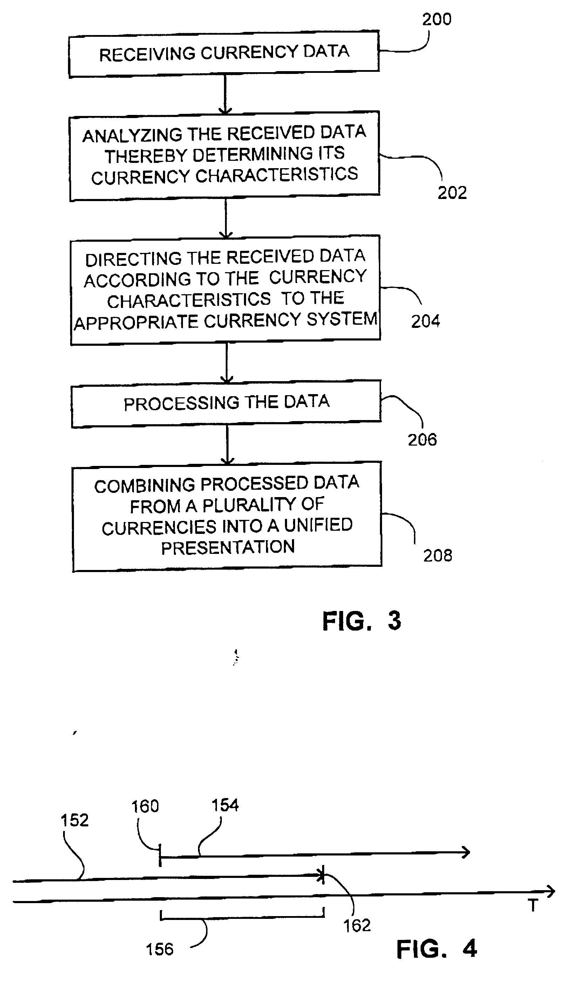

Reference is now made to Fig. 3, which is a schematic illustration of method for operating apparatus 100 of Fig. 2, operative in accordance with a preferred embodiment of the invention.

In step 200, the apparatus 100 receives currency data. For example, this data can include an amount, a currency attribute indicating the currency according to which the amount is to be addressed and a command for performing an operation with respect to that amount.

In step 202, the apparatus 100 analyzes the received data thereby determining its currency characteristics.

In step 204, the apparatus 100 directs the received data according to the currency characteristics to the appropriate currency system. In the present example, if the amount was received in the local currency, then the apparatus 100 directs it to the local currency system 110. If the amount was received in the new currency, then the apparatus 100 directs it to the new currency system 120. If the amount was received in another currency, then the apparatus 100 directs it to a selected one of the currency systems 110 and 120 where the selection can be made according to a plurality of parameters, such as the date of operation, the type of operation and the like.

In step 206, the apparatus 100 processes the received data in the selected currency system, according to the currency of the respective currency of that selected currency system.

In step 208, the apparatus 100 combines the processed data from the various currency systems, thereby producing a unified presentation.

The present invention offers several major advantages over the prior art. One advantage is that the current tailor made local currency system of the bank is not changed at all. Another advantage is the new currency system is basically identical to the original local currency system. Accordingly, the only new development required is in the input analyzing system and the output combining system. It will be appreciated by those skilled in the art that the resources and efforts which have to be invested in such development are considerably smaller than those which are required to transform existing systems or alternatively, and convert to newly designed multi currency systems.

Reference is now made to Fig. 4, which is an illustration of the schedule of operating the currency systems and the transition period therebetween.

The operating schedule of the local currency system is illustrated by an arrow 152 and ends at a time point, designated 162. The operating schedule of the new currency system is illustrated by an arrow 154 and starts at a time point, designated 160. The transition period 156 exists from time period 160 to time period 162.

According to the present invention, the local currency system 110 operates normally as it always has and is preferably shut sown at time period 162.

The new currency system 120 commences operation at time period 160 and operates from that moment on. No operation other conventional maintenance is required for both systems and neither is affected by the operating or shutting down of the other. It will be appreciated by those skilled in the art that is a tremendous advantage of the present invention, since it increases to decreases to minimum the probability of error in any of the system due to the adding or removing of a currency.

It will be appreciated by persons skilled in the art that the present invention is not limited to what has been particularly shown and described hereinabove. Rather the scope of the present invention is defined by the claims which follow.

## Claims

1. In a computer apparatus including an input analysis and routing unit, an output combining unit and a plurality of currency processing systems, connected between the input analysis and the output combining unit, each of the currency systems being associated with a predetermined currency, a method for operating the apparatus in a multi currency environment, the method comprising the steps of:
receiving currency data from an external source;
analyzing the received data thereby determining the currency characteristics of said received data;
directing the received data according to said currency characteristics to a selected one of said currency systems; and
processing said received data in said selected currency system, according to the currency associated therewith.

2. The method according to claim 1 further comprising the step of combining said processed data from said selected currency systems, thereby producing a unified presentation thereof.

3. A computer apparatus comprising;
an input analysis and routing unit,
an output combining unit, and
a plurality of currency processing systems, connected between the input analysis and the output combining unit, each of the currency systems being associated with a predetermined currency,
wherein said input analysis and routing unit receives currency data, analyzes it and routs it to a selected one of said currency processing units, which is selected according the currency characteristics of said received currency data;
wherein said selected currency processing unit processes said received currency data according to the currency associated with said selected currency processing unit, thereby producing processed currency data; and
wherein said output combining unit combines said processed currency data thereby producing a unified presentation thereof.
